# FASCICULE DE BREVET EUROPEEN

(11) **EP 4 347 387 B1**
(45) Date de publication et mention de la délivrance du brevet: **26.02.2025**
(21) Numéro de dépôt: 22733697.1
(22) Date de dépôt: 30.05.2022
(51) Int. Cl.: B63H 9/061

(54) **VÉHICULE À PROPULSION VÉLIQUE**
SEGELGETRIEBENES FAHRZEUG
SAIL-DRIVEN VEHICLE

(30) Priorité: 28.05.2021 FR 2105611
(43) Date de publication de la demande: 10.04.2024
(73) Titulaire: COMPAGNIE GENERALE DES ETABLISSEMENTS MICHELIN, 63000 Clermont-Ferrand (FR)
(72) Inventeur: ESSINGER, Olivier, 63040 CLERMONT-FERRAND Cedex 9 (FR); MAGNE, Pierre-Alain, 63040 CLERMONT-FERRAND Cedex 9 (FR); SAVIO, Cédric, 63040 CLERMONT-FERRAND Cedex 9 (FR); FRAGNIERE, Bruno, 63040 CLERMONT-FERRAND Cedex 9 (FR)
(74) Mandataire: M.F.P. Michelin
(86) Numéro de dépôt international: PCT/FR2022/051020
(87) Numéro de publication internationale: WO 2022/248814

(56) Documents cités:
- EP-B1- 3 492 927
- JP-A- 2015 174 604
- JP-A- 2015 205 525
- US-A1- 2015 191 234

## Description

L'invention concerne un véhicule à propulsion vélique et se situe dans le domaine de la propulsion vélique ou de la propulsion vélique hybride.

On rappelle ci-après quelques définitions utilisées dans ce qui suit. :
- **Gréement** : ensemble des pièces fixes et mobiles d'un bateau, type voilier, permettant sa propulsion et ses manœuvres par la force du vent.
- **Gîte :** inclinaison transversale d'un navire causée par un phénomène extérieur ou non.
- **Traînée hydrodynamique** : force de frottement entre le bateau et l'eau. Plus la traînée est élevée, plus le bateau est freiné.
- **Traînée aérodynamique** : composante de la force subie par un corps en mouvement dans un fluide qui s'exerce dans le sens opposé à la direction du mouvement. Selon l'invention, la voile génère une traînée aérodynamique.
- **Portance aérodynamique** : composante de la force subie par un corps en mouvement dans un fluide qui s'exerce perpendiculairement à la direction du mouvement. Selon l'invention, la voile génère une portance aérodynamique.
- **Vent relatif ou vent apparent** : somme vectorielle du vent créé par la vitesse propre du bateau et la vitesse réelle du vent.
- **Résultante aérodynamique** : somme vectorielle de la portance aérodynamique et de la traînée aérodynamique.
- **Polaire de vitesse** : représentation graphique exprimant la vitesse d'un bateau en fonction de la direction et de la force du vent. Une polaire de vitesse permet d'établir des scénarios de navigation. Dans certains cas elle pourrait aussi être en fonction de la pression différentielle de gonflage de la voile (voile qu'on peut également appeler aile lorsque la voile est du type gonflable et à une certaine valeur de la pression à l'intérieur de celle-ci).
- **Angle d'incidence de vent :** angle entre le plan du profil d'une voile (ou d'une aile lorsque la voile est du type gonflable à une certaine valeur de la pression à l'intérieur de celle-ci) et la direction du vent relatif.
- **Système de contrôle en boucle ouverte, encore appelé système sans retour** : dans un système en boucle ouverte, la sortie souhaitée ne dépend pas de l'action de contrôle ; la sortie du système est libre de l'entrée ; en régulation, un système de contrôle en boucle ouverte est une forme de contrôle qui ne prend pas en compte la réponse du système.
- **Système de contrôle en boucle fermée, encore appelé système avec retour** : dans un système en boucle fermée, la sortie souhaitée dépend de l'action de contrôle du système, et donc de l'entrée. Certes plus complexe, un système en boucle de contrôle fermée est plus fiable, précis et stable ; il permet une optimisation des résultats attendus en sortie par la mesure de ses valeurs de sortie et la comparaison avec les valeurs de consigne ; en régulation, un système de contrôle en boucle fermée est un système qui intègre la réaction de ce système.
- **Prise de ris :** consiste à réduire la surface d'une voile en le repliant en partie par le bas, afin d'adapter la surface de la voile à la force du vent. La prise de ris peut se faire manuellement ou automatiquement.
- **Bandes de ris :** zones horizontales en parties renforcées permettant de fixer les renvois pour prise de ris, avec par exemple des œillets ou des poulies. Ces bandes de ris sont disposées sur la voile au niveau de la nervure à chaque hauteur où une prise de ris est prévue. Il y a autant de bandes de ris que de possibilités de réduire la voilure.
- **Bôme :** espar horizontal, articulé proche de la base du mât, et qui permet de maintenir et d'orienter certaine voile. La bôme peut également recevoir la voile lorsque celle-ci est affalée.
- **Faseyer :** une voile qui faseye est une voile insuffisamment bordée qui se dégonfle en partie. Une voile bien réglée doit être à la limite du faseyement. Avec une voile gonflée, il n'y a pas de faseyement, ce qui permet de rester face au vent.
- **Têtière** : extrémité supérieure de la voile qui épouse le contour supérieur de la voile gonflable.
- **Affalage** : consiste à descendre la voile.
- **Hissage** : consiste à monter la voile.
- **Réceptacle de voile** : en plus de recevoir la voile affalée, il peut intégrer d'autres fonctions, telles que reprendre les efforts de tension fournis par la voile, ou bien loger d'autres actionneurs, capteurs, stockage d'énergie et module de commande utilisés pour opérer la voile.

### Art antérieur

Il est déjà connu la propulsion de navire par moteur thermique pour lequel il est aisé de mesurer la consommation de carburant, et ainsi en déduire la quantité de gaz carbonique émise.

Une telle mesure sur un navire à propulsion vélique est plus délicate, car complexe et plutôt aléatoire.

Il est connu du document CN 107878720A une voile de voilier, de profil symétrique et souple et pouvant se replier. Un tel voiler est équipé d'un dispositif hydraulique de mesure de l'angle et de la force du vent relatif. Ces données sont acquises en permanence par un ordinateur muni d'un algorithme calculant selon un système de contrôle en boucle ouverte les données, pour réguler le comportement de la voile face à l'angle et à la force du vent.

Le document JP 2015 205525 A divulgue un véhicule à propulsion vélique avec des capteurs de mesure de la force du mât vers la coque. Il ne divulgue ni une voile gonflable, ni des capteurs pour la mesure de la pression différentielle de la voile.

Malheureusement un tel dispositif fonctionnant selon un système en boucle ouverte seul, ne tient pas compte de tous les facteurs influençant la valeur de la poussée aérodynamique. En particulier, ce modèle ne va pas intégrer l'évolution des polaires en fonction de l'état de la mer, des fortes variations de vent, des imperfections de modélisation de l'aile (polaire de vitesse) ou de la dégradation des performances de la voile dans le temps.

En outre, avec de tel système, il reste difficile de mesurer la poussée, la puissance ou l'énergie fournie par la propulsion vélique puisque ce système ne comporte pas de capteur de l'effort que fournie l'aile au navire.

### Résumé de l'invention

Aussi il subsiste le besoin de disposer d'un système capable de réguler la poussée vélique afin de l'optimiser et également de permettre de quantifier précisément, de manière fiable et directe, la poussée aérodynamique transmise par la voile à la coque d'un navire, comprenant au moins une voile et, éventuellement un système hybride, dans un but d'économiser du carburant, et donc de diminuer les émissions de gaz carbonique.

L'invention a pour objet un véhicule à propulsion vélique totale ou partielle comprenant une coque, au moins une voile gonflable (ou aile), au moins un mât autoporté ayant un axe vertical, ledit mât comprenant une partie fixe disposée au niveau de la coque et une partie mobile autour de l'axe vertical.

Le véhicule selon l'invention se caractérise en ce que ledit mât comprend, soit dans la partie fixe des capteurs de mesure de paramètres physiques destinés à fournir des données numériques sur la force de poussée dans l'axe du bateau, la force de dérive du bateau, la pression différentielle de la voile pour une voile gonflable (ou de l'aile pour une aile verticale gonflable), soit dans la partie mobile des capteurs de mesure de paramètres physiques destinés à fournir des données numériques sur la force de poussée aérodynamique projetée dans l'axe de la voile (ou dans l'axe de l'aile), la force de poussée aérodynamique projetée dans l'axe perpendiculaire à la voile (ou à l'aile), la pression différentielle de la voile pour une voile gonflable (aile).

La solution de l'invention peut s'appliquer aux véhicules à propulsion vélique comportant des voiles gonflables ou non, aux voiles tendues, aux voiles rigides supportées par un mât de manière non haubanée ou aux voiles montées sur un mât autoporté.

Selon l'invention, les capteurs incorporés dans la partie fixe par rapport au référentiel du bateau, par exemple dans la partie fixe recevant les éléments de mise en rotation du mât, permettent de mesurer de manière fiable et directe les efforts transmis au bateau et de connaître directement les efforts dans l'axe du bateau (efforts servant à la propulsion) et les efforts perpendiculaires à l'axe du bateau (efforts qui provoquent la gite du bateau). Pour ceci, on peut, par exemple équiper de jauges de contrainte l'un des paliers de réception de la base du mât (on comprend de support et de guidage en rotation du mât), ce qui permet d'avoir une mesure directe des efforts. Lorsque le mât est télescopique on préfère équiper de jauges de contrainte l'un des paliers qui assure le support et le guidage en rotation du tube inférieur du mât.

Lorsqu'il n'est pas sur la partie fixe, le système de mesure peut comprendre des capteurs de mesure fixés sur le mât, par exemple en lui collant des jauges de contrainte, ce qui permet de connaître les efforts dans l'axe de la voile (ou de l'aile lorsqu'il s'agit d'une voile gonflée) et les efforts qui lui sont perpendiculaires. Il est dans ce cas nécessaire d'avoir une mesure précise de l'angle de l'aile par rapport à l'axe du bateau (efforts servant à la propulsion) et des efforts perpendiculaires au bateau (qui provoquent la gite du bateau).

Les valeurs issues de la mesure directe (référentiel bateau) ou indirecte (référentiel aile) des efforts permettent déjà d'évaluer de manière précise les gains obtenus avec le système de propulsion vélique.

Les valeurs mesurées offrent également la possibilité de modifier le fonctionnement du navire en utilisant une régulation en boucle ouverte et/ou une régulation en boucle fermée.

Ainsi, en boucle ouverte, les valeurs mesurées des efforts servent de surveillance lors du déplacement du bateau de manière à ne pas dépasser des valeurs limite préétablies des efforts mesurés.

De préférence, un ordinateur équipé d'un algorithme de calcul des données numériques, calcule, selon un système de contrôle en boucle ouverte, et à partir desdites données numériques, telles que la vitesse et la direction du vent, les valeurs de réglage, tels que les réglages de pression différentielle, d'angle d'incidence et de surface de voile souhaités. Si, dans ce mode de fonctionnement en boucle ouverte, les réglages d'angle d'incidence, de surface d'aile et de pression conduisent à des efforts trop grands, dépassant des limites préétablies, le système reçoit une alerte en provenance des capteurs d'effort de manière à pouvoir agir pour diminuer ces efforts.

De préférence, un ordinateur, équipé d'un algorithme de calcul des données numériques, calcule, selon un système de contrôle en boucle fermée, à partir desdites données numériques, les forces transmises de la voile vers la coque afin de modifier en temps réel le fonctionnement du navire pour optimiser ou réguler finement sa poussée aérodynamique. L'ordinateur utilise la valeur de poussée mesurée pour essayer de la réguler (à une valeur choisie en deçà de la poussée maximale) ou l'optimiser (recherche de la poussée maximale) et donc de maximiser le gain énergétique.

Il permet ainsi d'effectuer une optimisation de la poussée maximum transmise au navire par le système de propulsion vélique, basée sur une régulation en boucle fermée travaillant directement sur la maximisation de la poussée, et donc des gains.

Le véhicule selon l'invention présente les avantages de pouvoir suivre facilement et en temps réel l'évolution du système par conséquent sa dérive par rapport aux valeurs initiales, et de prendre en compte cette évolution dans l'optimisation de la poussée, et donc permettre la programmation d'opérations de maintenance, et enfin, comme par exemple dans le document WO 2017/221117A1, de visualiser l'évolution de sa pression pour une action donnée du système de gonflage, et ainsi suivre l'évolution de sa perméabilité. En effet, en boucle fermée, le système traque l'effort maximal ou l'effort de consigne et permet de s'affranchir des erreurs de modélisation de la polaire de vitesse. Si, au fil du temps, pour des mêmes conditions de vent, de pression de gonflage, le point de fonctionnement (angle d'incidence) trouvé par le système de régulation en boucle fermée évolue, c'est que le système a évolué. Il s'est certainement dégradé et l'on peut prévoir une intervention de maintenance.

Le système de régulation du véhicule à propulsion vélique de l'invention, peut fonctionner avec les deux boucles : ouverte et fermée en combinaison lorsque tout est opérationnel. La boucle ouverte permet de prépositionner l'aile afin de produire l'effort souhaité en réglant un angle d'incidence, une surface de l'aile et un pression différentielle basés sur des tables de modélisation. La boucle fermée affine ces réglages dans le but d'optimiser la poussée en se basant (en contre réaction) sur la mesure de l'effort de poussée.

Toutefois suivant les défaillances rencontrées, le système peut fonctionner en mode dégradé qu'avec l'une des deux boucles de régulation (ouverte ou fermée).

Le véhicule selon l'invention permet de préciser les gains obtenus avec le système de propulsion vélique.

Le véhicule selon l'invention permet de quantifier précisément et de manière mesurée la force de propulsion vélique dans l'axe du bateau, qui combinée à la vitesse bateau fournira les kW fournis, les kWh consommés, et les gains de CO2.

Par véhicule à propulsion hybride selon l'invention, on entend la propulsion vélique couplée à une autre source de propulsion comme par exemple une propulsion par une hélice, entraînée par un moteur électrique ou à combustion, avec comme stockage d'énergie des batteries, de l'hydrogène (avec une pile à combustible), du gaz naturel ou du fuel.

Par véhicule à propulsion vélique, on entend par exemple les chars à voile, les chars à glace, les voitures, les bateaux pour autant que la liaison entre la voile et le véhicule est réalisée de manière non haubanée avec un système de mât auto-porté.

### Description des dessins

L'invention va être décrite à l'aide des figures suivantes données à titre d'illustration, schématiques et non nécessairement à l'échelle, et dans lesquelles :
- La figure 1 représente un rappel des différentes forces physiques qui s'appliquent sur un navire, par exemple du type voilier avec un moteur, et notamment la projection de la force aérodynamique résultante ;
- La figure 2 représente une vue schématique du système de contrôle de la poussée en boucle fermée utilisé par l'algorithme dans le navire selon l'invention;
- La figure 3 représente une vue schématique du système de contrôle en boucle ouverte utilisé par l'algorithme dans le navire selon l'invention;
- La figure 4 représente une vue schématique du système de contrôle en boucle fermée combinée au système de contrôle en boucle ouverte utilisé par l'algorithme dans le navire selon l'invention.

Un rappel de quelques définitions d'hydrodynamique et d'aérodynamique en matière de propulsion vélique est exposé ci-après.

Un véhicule à propulsion vélique, dénommé ci-après voilier ou navire, est en contact avec l'air et avec l'eau. Sur le plan de la physique, les facteurs prépondérants sont les forces hydrodynamique et aérodynamiques qui s'exercent sur la coque, les voiles et les appendices (dérives, quille, gouvernail), hélice.

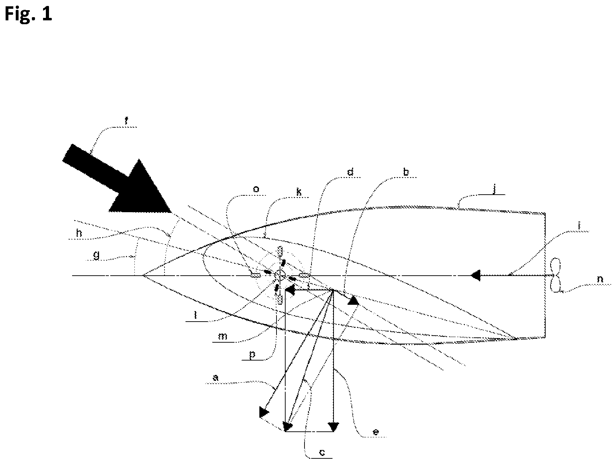

Comme le montre la **figure 1****,** la force **aérodynamique** (ou poussée vélique) résulte de la déviation de l'air par au moins une voile. La force aérodynamique est relative à la position et la surface de la voile et, à la position et la force du vent relatif. La force de traînée est dans la direction du vent relatif, la force de portance est dans la direction perpendiculaire du vent relatif, elle n'est pas toujours perpendiculaire à la voile. Par exemple, à 0°, un profil symétrique n'a pas de portance de par le fait que l'air parcourt strictement la même distance sur l'extrados et l'intrados. Il ne génère à ce moment que de la traînée.

La force aérodynamique générée par la voile peut aussi être décomposée dans le référentiel du bateau, et non pas dans celui de la voile, pour être composée de la force propulsive vélique (qui est dans l'axe de marche du bateau) et en une force de dérive (perpendiculaire à l'axe du bateau) qui peut induire de la gîte (inclinaison transversale d'un bateau causée par un phénomène extérieur tel que le vent).

La force **hydrodynamique** résulte du frottement de l'eau sur la coque et la dérive ou quille et les différents appendices immergés. Sa direction dépend de la force aérodynamique à laquelle elle s'oppose, de la force propulsive en mode hybride, de l'état de la mer et des courants marins. La composante longitudinale est appelée traînée hydrodynamique, et la composante transversale est appelé portance de la dérive ou force anti-dérive ou portance hydrodynamique. La direction et l'intensité de la force hydrodynamique ne dépend pas que de la force aérodynamique. Pour un bâtiment (bateau) fonctionnant en mode hybride (vent et autre énergie), la force hydrodynamique va dépendre fortement de la vitesse du bâtiment générée par la propulsion thermique ou électrique par exemple, de l'état de la mer et des courants marins.

Lorsque la force vélique est supérieure à la force hydrodynamique le bateau accélère. Lorsque la force vélique est inférieure à la force hydrodynamique le bateau ralentit. En outre, si la force aérodynamique est plus grande mais dirigée vers l'arrière du bateau ce dernier va ralentir. Si la force hydrodynamique est dans le sens de marche du bateau (car il y a un fort courant), le bateau (voilier) va accélérer.

C'est en optimisant le réglage de la voile que le bateau (voilier) atteindra sa performance maximale en termes de poussée vélique dans le sens de la marche. En effet, c'est l'optimisation de l'angle de la voile par rapport au vent relatif et à la direction du bateau, ainsi que le réglage de la surface de la voile qui permettra au bateau d'atteindre le maximum de sa propulsion vélique dans l'axe du bateau. Il peut y avoir un paramètre de réglage supplémentaire en jouant sur la pression interne de la voile. Ceci permet ainsi d'augmenter la vitesse du bateau ou au contraire de conserver la même vitesse tout en diminuant la consommation d'autres énergies, par la faveur de la propulsion vélique.

La figure 1 reprend chacune des dénominations précédentes avec une référence qui lui est propre listées ci-après :
a : Force de portance
b : Force de trainée
c : Force résultante aérodynamique
d : Force poussée aérodynamique (dans l'axe du navire)
e : Force de dérive aérodynamique
f : Vent relatif
g : Angle relatif aile - axe bateau (ex : 15°)
h : Angle vent relatif et axe bateau (ex : 30°)
i : Force propulsive hélice
j : Coque
k : Voile
l : Mât
m : Centre de poussée aérodynamique
n : Hélice
o : capteur sur partie fixe (référentiel coque)
p : capteur sur partie mobile (référentiel voile)

Les informations données par la figure 1 permettent de passer des valeurs mesurées dans le référentiel coque, aux capteurs de données provenant du référentiel de la voile, et inversement.

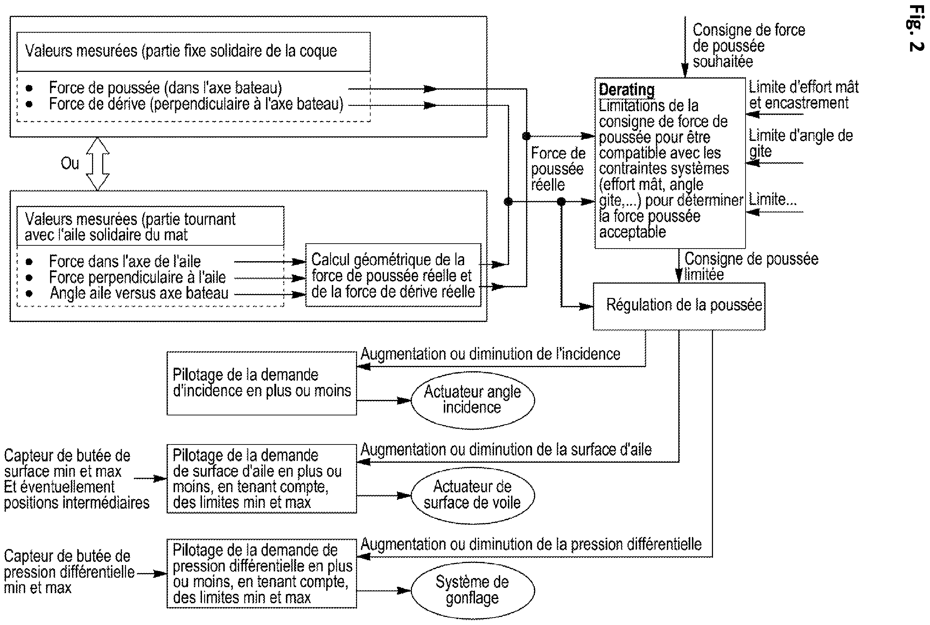

Comme le montre la **figure 2****,** le système de contrôle en boucle fermée utilisée dans l'objet de l'invention, comprend différentes étapes de calculs à partir des données d'entrées mesurées. Le système de contrôle utilisé selon l'invention a pour but, soit d'atteindre une valeur de consigne de la force de poussée si atteignable, correspondant à une commande de gaz par exemple, soit d'aller à la valeur maxi de la force de poussée dans l'axe du navire.

Ce système de contrôle doit aussi tenir compte de limitations intrinsèques du système tel que la force maximale acceptable sur le mât, la différence de pression maximum acceptable pour une voile gonflée, ou alors des contraintes liées au navire, tel que l'angle de gite maxi acceptable par exemple.

L'utilisation du système de contrôle en boucle fermée, avec les capteurs directement dans le référentiel de la coque mesure directement la valeur régulée, à savoir la poussée dans l'axe du navire, sans avoir besoin de l'obtenir par un calcul basé sur des valeurs prévisionnelles. Une autre solution est de mesurer la poussée dans le référentiel de la voile, c'est-à-dire dans l'axe de la voile et dans l'axe perpendiculaire à la voile. Il sera alors nécessaire de connaitre l'angle de la voile par rapport au navire, de manière à ramener les forces dans l'axe de la voile et perpendiculaire à la voile (référentiel de la voile) en force de poussée et force de dérive dans le référentiel du navire. Quant à la régulation de la différence de pression entre l'extérieur et l'intérieur de la voile, en cas de voile gonflable, cette différence de pression peut être mesurée par un capteur de pression différentiel et régulée par une consigne de différence de pression fixe, soit asservie en tenant compte par exemple de la force et direction du vent, des variations de force et direction du vent (ratio entre valeur max et valeur min), de l'état de la mer par exemple. Le système de gonflage peut par exemple être réalisé avec des ventilateurs. Des ventilateurs sont régulés afin d'atteindre la consigne de différence de pression entre l'intérieur et l'extérieur de l'aile.

En utilisant un système de contrôle ou de régulation en boucle fermée permet une optimisation des efforts et, à l'aide des valeurs fournies par les capteurs d'effort, la quantification du gain de baisse d'émission de CO₂.

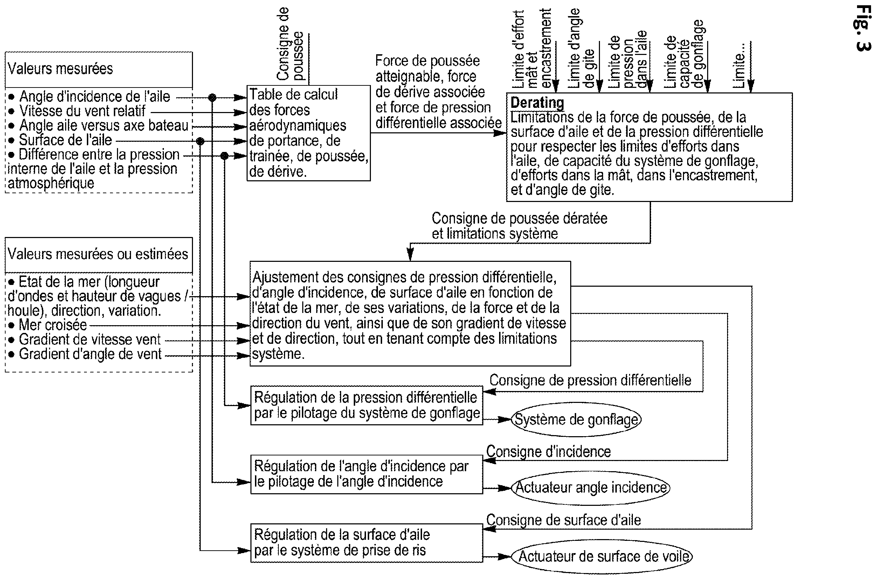

Comme le montre la **figure 3****,** l'algorithme de calculs équipant le navire selon l'invention peut calculer une consigne d'angle d'incidence de l'aile (ou voile gonflable), une consigne de la surface de l'aile (ou voile gonflable) et une consigne de la pression différentielle de l'aile (ou voile gonflable), selon un système de contrôle en boucle ouverte, sur la base de tables de conversion par exemple, pour une valeur de poussée souhaitée. Ces valeurs de réglages (consigne d'angle d'incidence de l'aile, une consigne de la surface de l'aile et une consigne la pression différentielle de l'aile) resteront les mêmes, si par exemple la voile était déchirée ou abimée, car il ne s'agit pas d'une mesure du résultat.

En système de contrôle en boucle ouverte, on peut agir sur la régulation de la pression par exemple, en cas de voile gonflable, en régulant une vitesse de rotation des ventilateurs, qui va correspondre à une certaine différence de pression (table d'équivalence vitesse - pression) pour la différence de pression entre l'intérieur de la voile et l'extérieur. Si le ventilateur est monté sans hélice, la pression ne sera pas la bonne, et on ne le verra pas. Il y a tout de même d'autres moyens permettant de vérifier ce genre de problème, comme par exemple la surveillance du courant moteur associé à une certaine vitesse.

L'avantage du système de contrôle en boucle ouverte est qu'il permet de connaitre à priori les valeurs à mettre dans le système pour obtenir une certaine poussée. Il permet aussi de s'affranchir des capteurs de mesure d'effort. La régulation de la poussée est par contre moins précise, et si les estimations initiales sont mauvaises, on ne le saura pas, de même si les performances se dégradent dans le temps puisque nous n'avons la réaction physique du système à travers les capteurs de force par exemple

Si l'on utilise que la régulation en boucle ouverte, on pourra fonctionner, sans avoir la possibilité de remettre à jour la table de conversion (polaire de vitesse), et probablement avec une erreur d'approximation, mais cela permet tout de même de fonctionner.

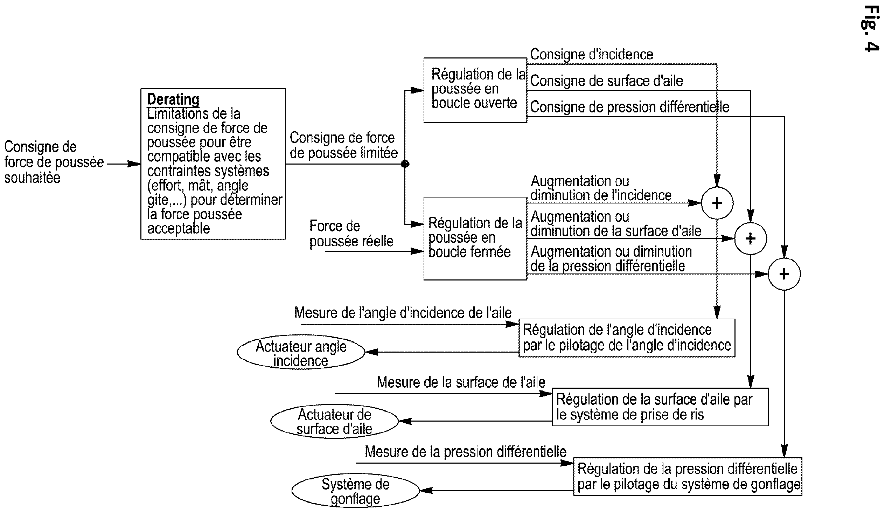

Mais comme le montre la **figure 4****,** l'algorithme utilisé par l'ordinateur du navire selon l'invention peut combiner le système de contrôle en boucle fermée, et le système de contrôle en boucle ouverte.

L'utilisation des deux systèmes de contrôle permet d'utiliser les valeurs mesurées de la boucle fermée pour remettre à jour les tables de valeurs estimées de la boucle ouverte. L'évolution de cette table de conversion (polaire de vitesse) permettra d'avoir une idée de l'évolution de la performance de la voile, soit en plus (rodage), soit en moins (usure). Cela peut être très utile pour la maintenance préventive. Les deux systèmes peuvent être totalement indépendants au niveau de la mesure. Par des actionneurs, cela peut être particulièrement intéressant pour des raisons sécuritaires, de fiabilité et de disponibilité.

Enfin, la régulation utilisant uniquement les capteurs de mesure dans la coque (support du mât), en cas de panne de la girouette utilisée pour mesurer la vitesse et la direction du vent, peut fonctionner de manière autonome selon les manières suivantes.

Premièrement, en libérant la rotation de la voile, le système se met face au vent relatif, et on utilise la voile comme girouette. Cela est possible grâce au décalage du mât versus centre de poussée (auto-alignement de l'aile dans le vent).

Deuxièmement, il est ensuite possible d'hisser la voile jusqu'à une certaine hauteur correspondant à une valeur de trainée acceptable. La mesure de la traînée de la voile permet d'évaluer la force du vent, ce qui permet de déterminer la surface de voile nécessaire.

Enfin, l'optimum de poussée ou la valeur de consigne peut alors être atteint, en tenant compte des limitations du système, comme les efforts maximums de gite par exemple.

Ainsi il est tout à fait possible d'utiliser un système de contrôle en boucle fermée seul en cas de défaillance de la girouette nécessaire à la boucle fermée rendant celle-ci inopérante. L'utilisation combinée des deux systèmes indépendants permet d'augmenter la fiabilité de la réponse obtenue, la disponibilité et la sécurité.

On peut également utiliser de manière alternative l'un ou l'autre de ces systèmes de contrôle avec la possibilité de mesurer l'évolution des réponses obtenues.

Ces systèmes de contrôle fonctionnent de la manière suivante.

Dans un premier temps, on utilise les polaires de la voile pour les calculs. Les polaires fournissent, pour différentes vitesses et angle d'incidence de vent, différentes surfaces de voile (totale ou diminuée par un, deux ou trois ris), et éventuellement différentes pressions différentielles, les valeurs de portance et traînée de la voile atteignable. A partir de ces données, on calcule la force résultante aérodynamique.

Par somme vectorielle de la force de portance et de la force de trainée aérodynamique, on obtient la force aérodynamique résultante.

Il faut ensuite passer du référentiel de la voile au référentiel du navire de manière à obtenir les forces de poussée aérodynamique dans l'axe du bateau, et de dérive perpendiculairement à l'axe du bateau (cette dernière provoquant la gîte du navire). Pour passer d'un référentiel à l'autre il est nécessaire d'avoir l'angle incidence de la voile et l'angle de la voile par rapport à l'axe du navire.

Dans la description qui suit, on détaille le fonctionnement de la voile en mode normal et en mode comprenant un dysfonctionnement.

### Exemple de mode normal :

Initialement la voile est repliée dans le réceptacle de la voile, avec le mât s'il est télescopique en position repliée. Le réceptacle de la voile peut être fermé sur le dessus de manière automatique ou manuelle de manière à protéger le tissu de la voile des agressions des UV, de l'humidité, du vent, du sel, ... La voile est bloquée en rotation, et positionnée dans l'axe du navire. Les commandes électroniques de puissance sont arrêtées.

Ensuite, les commandes électroniques sont mises sous tension et contrôlées. Si tout est correct, la partie supérieure du réceptacle de voile est ouverte manuellement ou automatiquement. La rotation de la voile est également débloquée (sortie du mode parking) manuellement ou automatiquement. La voile est prête à fonctionner.

Le hissage de la voile s'effectue de la manière suivante.

Dans cette phase de hissage le système fonctionne normalement (sans panne) en boucle ouverte. On connaitra à priori la force et la direction du vent relatif, l'angle de la voile par rapport au bateau, la pression à l'intérieur de la voile, et par conséquent les forces de poussée et de dérive attendues. Avec ces données, les réglages à mettre sur la voile seront définis à priori. La voile sera donc hissée en la positionnant face au vent, et déployée complétement, ou en gardant des ris selon les calculs, avec un angle d'incidence visé, qui sera réactualisé en fonction des mesures de vitesse et de force de vent relatif, d'angle de l'aile par rapport au bateau et de pression interne de l'aile, et de la consigne de poussée visée.

En cas de panne d'un élément de la boucle ouverte empêchant celle-ci de fonctionner et dans le cas d'une panne de girouette expliqué ci-dessus, le hissage peut, dans un mode dégradé, se réaliser en utilisant la régulation en boucle fermée. On découvrira tout au fur et à mesure que la voile est hissée. La première étape consiste à mettre la voile face au vent relatif, ce qui peut se faire en laissant libre la commande de l'angle d'incidence de la voile par rapport au bateau. La voile ou le réceptacle de voile sont utilisés comme une girouette, grâce au fait que le centre de poussée aérodynamique est décalé par rapport à l'axe du mat. Le système se met automatiquement face au vent de lui-même, et à partir de là, la direction du vent est connue. Quant à la force du vent, il est possible d'avoir une première évaluation en observant la vitesse de déplacement de la voile, pour revenir face au vent. Il suffit de la décaler de 10° et de regarder à quelle vitesse elle revient face au vent. Cela donnera une première idée sur la surface de voile qui sera nécessaire. Il est aussi possible de l'évaluer en mesurant la traînée de la voile. Il faut ensuite monter la voile tout en la laissant face au vent, jusqu'à sa plus petite surface, correspondant par exemple au troisième ris. Si les efforts ne dépassent pas les limitations en la réglant à la poussée maximale, il est possible de libérer un ris de plus, par exemple libérer le troisième ris. Si les efforts ne dépassent à nouveau pas les limitations il est possible d'augmenter à nouveau la surface de voile, ceci pouvant aller jusqu'à déployer la surface complète de la voile. Durant la phase de hissage, la voile est laissée libre en rotation de manière à être positionnée face au vent. Le seul moment où l'angle sera piloté sera à chaque nouvelle surface (ris 1, ris 2, ...) pour produire les efforts de poussées. Durant le hissage, la pression interne de la voile est régulée, et la vitesse de montée aussi afin de garantir un fonctionnement optimal en minimisant le vieillissement de l'aile (faseyement).

En boucle ouverte et/ou fermée, on connait le réglage à priori grâce à la boucle ouverte, mais avec une vérification en permanence de la cohérence des valeurs projetées avec les valeurs mesurées (boucle fermée) et des mises à jour en temps réel des modèles de calcul.

La voile fonctionne de la manière suivante.

Lorsque la voile est en fonctionnement, le réglage va être constamment optimisé ou régulé de manière à correspondre à la valeur de consigne demandée en tenant compte des limitations, ou alors pour avoir la poussée maximum en tenant compte des limitations.

Ce réglage va se faire majoritairement en utilisant la régulation en boucle fermée, ce qui permettra d'optimiser au mieux la poussée en tenant compte des limitations. Toutefois le réglage à priori de la boucle ouverte basé sur les polaires de vitesse permet de positionner l'aile proche de l'optimum, laissant les régulateurs de la boucle fermé affiner le point de fonctionnement afin d'atteindre la poussée souhaité ou maximale. D'autre part, lorsque le vent change de direction très rapidement (bascule de vent, passage vent du Nord à vent du Sud) la régulation en boucle fermée peut être momentanément interrompue afin de repositionner rapidement l'aile proche du nouvel optimum puis de réactiver la régulation en boucle fermée. Au-delà des valeurs mesurées, il est aussi possible d'utiliser les prévisions de vent, ou alors les valeurs mesurées par les balises ou les autres bateaux, pour faire un réglage à priori. Durant la phase de voile en fonctionnement, la poussée est optimisée, mais les autres valeurs tel que la dérive par exemple sont observées aussi, de manière à ne pas dépasser les limitations imposées. Si ces valeurs venaient à être dépassées, il est possible de les limiter en jouant sur l'angle d'incidence, ou alors en réduisant la surface de voile (voir prise de ris). A l'inverse, si les valeurs sont trop basses, et qu'il reste un ou plusieurs ris à larguer, il faut le faire tout en continuant la surveillance des forces de poussée et de dérive.

Il est important de comprendre qu'une certaine poussée peut être obtenue avec des réglages qui peuvent être différents. Il est par exemple possible d'obtenir une poussée plus faible en changeant l'angle d'incidence de la voile, ou en réduisant la surface de la voile.

L'avantage de jouer sur l'angle et que c'est une opération rapide ne nécessitant que peu d'énergie. Lorsque le vent est changeant par exemple, c'est la manœuvre à utiliser.

Il peut être également très intéressant de réduire la surface de voile en prenant un ris, de manière à réduire simultanément la surface de la voile et la hauteur du centre de poussée aérodynamique. Cette opération permettra une fois le ris pris, de diminuer de l'effort de dérive, de manière à rester dans des valeurs de dérive acceptables et, si nécessaire, de prendre un ris supplémentaire, ou d'affaler complétement l'aile (ou la voile).

Pour affaler la voile, on utilise la même opération que celle de prise de ris.

Une fois la voile affalée, il est possible de la mettre dans l'axe du bateau afin de verrouiller de manière manuelle ou automatique la rotation de la voile. Il faut ensuite la protéger des agressions extérieures en refermant de manière manuelle ou automatique la partie supérieure du réceptacle de voile. Les systèmes électroniques de commande et de puissance peuvent alors être arrêtées.

Lors d'un dysfonctionnement, différentes situations peuvent se présenter. On expose ci-après certaines d'entre elles :
**Coupure complète d'alimentation avec la voile en fonctionnement** : dans ce cas, le moteur d'orientation de la voile (incidence) est mis en libre en rotation, et la voile va se mettre en drapeau face au vent. Les ventilateurs s'arrêtent, mais l'entrée d'air dynamique continue à alimenter la voile avec une pression suffisante qui empêche l'aile de faseyer. La voile va rester ainsi, avec la surface de voile en position, la voile restant en permanence face au vent (minimisation des efforts).

**Défaut des capteurs de la boucle de régulation ouverte** et essentiellement direction et vitesse de vent : la boucle de régulation fermée prend seule le relais.

**Défaut des capteurs de la boucle de régulation fermée** : la boucle de régulation ouverte prend seule le relais.

**Dysfonctionnement des deux boucles de régulation :** laisser la voile venir d'elle-même face au vent, ce qui minimise les efforts sur elle. Cela revient au même que de couper complètement l'alimentation électrique de la voile, sauf si les ventilateurs peuvent tout de même être actionnés sans danger. Une alimentation de secours séparée des ventilateurs peut être utilisée.

### Perte des actionneurs :

*Perte des ventilateurs* : Comme il y a plusieurs ventilateurs, il devrait être possible de les alimenter séparément pour ne pas les perdre tous. Cependant cela peut arriver tout de même. Dans ce cas-là le gonflage dynamique de la voile va éviter qu'elle faseye et nous permettre d'affaler la voile sans risque, jusqu'à ce que les ventilateurs soient réparés.

*Perte des actionneurs permettant de hisser ou d'affaler la voile* : S'il est possible d'affaler mais pas de hisser, ce n'est pas un problème, il suffit d'affaler l'aile pour se mettre en sécurité.

A l'inverse s'il n'est pas possible d'affaler, cela va dépendre de ce qui est bloqué. Si par exemple la ligne de guidage de la voile ne fonctionne plus, il sera tout de même possible d'affaler, mais cela nécessitera une intervention manuelle de manière à ranger l'aile de manière correcte. C'est la même chose si une prise de ris ne fonctionne plus. Par contre si le mat ne descend plus, il y a une solution manuelle pour actionner le moteur. Par contre si ce sont les tubes qui sont grippés, il est possible qu'un ou deux éléments ne se rétractent plus. Il sera alors possible de rentrer tous les autres éléments de manière à intervenir sur les éléments bloqués à une hauteur acceptable.

Si vraiment le mât restait bloqué complètement déployé, il est possible de laisser la voile face au vent de manière à minimiser les efforts.

*Perte de l'actionneur réglant l'angle de la voile :* En cas de perte du pilotage de l'actionneur de l'angle de mât, le système d'incidence se met automatiquement en mode libre, ce qui provoque la mise en drapeau de la voile face au vent. Il pourrait cependant arriver que l'actionneur se bloque, et qu'alors la voile se trouve avec un angle figé, ce qui pourrait être dangereux selon les conditions de vent. S'il est possible d'aller avec le bateau vers un angle qui fait que la voile se trouve face au vent, cela permet d'affaler la voile. On se retrouve dans le cas de tous les voiliers avec voiles classiques, ou il est nécessaire d'hisser ou d'affaler la grande voile en étant face au vent. L'autre solution dans le cas où il n'est pas possible ou pas souhaité de détourner le navire de sa route, il est possible d'avoir un système de déconnexion manuelle, ou alors un élément fusible dans la chaine de transmission de l'effort, qui va libérer la voile pour lui permettre d'aller face au vent.

### Exemple 1

Les gains de CO₂ peuvent aller de 100% de la consommation du navire (dans le cas où on passe à un mode de propulsion entièrement vélique comme NEOLINE) à 0% si on a le vent pile de face et que l'on doit affaler la voile car il n'y a pas de portance et en plus sinon on génère de la trainée. C'est toujours mieux qu'une solution rotor qui ne peut se replier et qui va freiner. On va passer en négatif.
Pour une valeur moyenne de gain on va tabler sur 10 à 15% selon les routes.

### Exemple 2

Pour un navire ayant les côtes suivantes :
- Longueur de bateau : 16 mètres
- Hauteur de la voile : 38 mètres
- Hauteur de la coque et de la voile : 41,5 mètres
- Hauteur de la coque : 3,5 mètres
On a les résultats suivants :

| **Angle d'incidence** | **Coefficient de portance Cz** | **Force propulsive 13kts** | **Force propulsive 20 kts** |
|---|---|---|---|
| 5° | 0,54 | 13500 N (91 kW) | 17500 N (175 kW) |
| 8° | 0,86 | 21700 N (145 kW) | 27300 N (280 kW) |

La force propulsive éolienne dans l'axe du bateau va varier entre autres selon la force et la direction du vent réel, la vitesse du bateau, l'angle d'incidence de l'aile, le nombre de voile, le profil de la voile et la surface des voiles.

Afin d'avoir un ordre de grandeur, prenons un vent de 15 nœuds situé perpendiculairement au bateau. La voile considérée sera une voile unique d'environ 500 m².

L'angle d'incidence de la voile sera fourni pour une valeur de 8°.

La vitesse du bateau a elle aussi une influence importante, nous regarderons les efforts pour des vitesses de bateau de 20 nœuds.

Avec les conditions décrites ci-dessus, la force propulsive pour une vitesse bateau de 20 nœuds, avec un vent réel de 15 nœuds faisant un angle de 90° par rapport à la route du bateau, l'angle d'incidence de la voile étant d'environ 8°, la force propulsive dans l'axe du bateau pour une seule aile de 500 m² sera de l'ordre de 27 kN, soit une puissance fournie d'environ 280 kW. Avec quatre voiles dans ces conditions, la puissance fournie est au-delà du MW.

Pour ce qui est de la valeur de poussée de dérive, elle va varier selon l'allure choisie dans un ordre de grandeur allant de 0 à 75% environ de la poussée dans l'axe du bateau.

## Revendications

1. Véhicule à propulsion vélique totale ou partielle comprenant une coque (j), au moins une voile gonflable, au moins un mât (I) autoporté ayant un axe vertical, ledit mât comprenant une partie fixe (o) disposée au niveau de la coque et une partie mobile (p) autour de l'axe vertical, **caractérisé en ce que** ledit mât comprend :
a. dans la partie fixe (o) des capteurs de mesure de paramètres physiques destinés à fournir des données numériques sur la force de poussée, la force de dérive et la pression différentielle de la voile pour une voile gonflable, ou bien,
b. dans la partie mobile (p) des capteurs de mesure de paramètres physiques destinés à fournir des données numériques sur la force de poussé aérodynamique projeté dans l'axe de la voile, la force de poussée aérodynamique projetée dans l'axe perpendiculaire à la voile et la pression différentielle de la voile pour une voile gonflable.

2. Véhicule selon la revendication 1, **dans lequel** un ordinateur, équipé d'un algorithme de calcul des données numériques, calcule, selon un système de contrôle en boucle fermée, à partir desdites données numériques, les forces transmises de la voile vers la coque afin de modifier en temps réel le fonctionnement du navire pour optimiser ou réguler sa poussée aérodynamique.

3. Véhicule selon la revendication 2, **dans lequel** l'ordinateur équipé d'un algorithme de calcul des données numériques, calcule, en complément du système de contrôle en boucle fermée, selon un système de contrôle en boucle ouverte, et à partir desdites données numériques les forces transmises de la voile vers la coque afin de modifier en temps réel le fonctionnement du navire pour optimiser sa poussée aérodynamique.

## Patentansprüche

1. Vollständig oder teilweise segelgetriebenes Fahrzeug, beinhaltend einen Rumpf (j), mindestens ein aufblasbares Segel, mindestens einen selbsttragenden Mast (l) mit einer vertikalen Achse, wobei der Mast einen festen Teil (o), der an dem Rumpf angeordnet ist, und einen um die vertikale Achse beweglichen Teil (p) beinhaltet, **dadurch gekennzeichnet, dass** der Mast Folgendes beinhaltet:
a. in dem festen Teil (o), Sensoren zum Messen von physikalischen Parametern, die dazu bestimmt sind, digitale Daten über die Schubkraft, die Abdriftkraft und den Differenzdruck des Segels im Fall eines aufblasbaren Segels bereitzustellen, oder aber,
b. in dem beweglichen Teil (p), Sensoren zum Messen von physikalischen Parametern, die dazu bestimmt sind, digitale Daten über die in die Achse des Segels projizierte aerodynamische Schubkraft, die in die zum Segel senkrecht verlaufende Achse projizierte aerodynamische Schubkraft und den Differenzdruck des Segels im Fall eines aufblasbaren Segels bereitzustellen.

2. Fahrzeug nach Anspruch 1, wobei ein Computer, der über einen Rechenalgorithmus für die digitalen Daten verfügt, mit einem System mit geschlossenem Regelkreis anhand der digitalen Daten die von dem Segel auf den Rumpf übertragenen Kräfte berechnet, um den Betrieb des Schiffes in Echtzeit zu modifizieren, um seinen aerodynamischen Schub zu optimieren oder zu regeln.

3. Fahrzeug nach Anspruch 2, wobei der Computer, der über einen Rechenalgorithmus für die digitalen Daten verfügt, zusätzlich zu dem System mit geschlossenem Regelkreis mit einem System mit offenem Regelkreis und anhand der digitalen Daten die von dem Segel auf den Rumpf übertragenen Kräfte berechnet, um den Betrieb des Schiffes in Echtzeit zu modifizieren, um seinen aerodynamischen Schub zu optimieren.

## Claims

1. Vehicle with total or partial sail propulsion comprising a hull (j), at least one inflatable sail, at least one self-supporting mast (l) having a vertical axis, said mast comprising a fixed part (o) disposed at hull level and a movable part (p) that can move about the vertical axis, **characterized in that** said mast comprises:
a. in the fixed part (o), sensors for measuring physical parameters intended to supply digital data on the thrust force, the drift force and the differential pressure of the sail for an inflatable sail, or else,
b. in the movable part (p), sensors for measuring physical parameters intended to supply digital data on the aerodynamic thrust force projected in the axis of the sail, the aerodynamic thrust force projected in the axis at right angles to the sail and the differential pressure of the sail for an inflatable sail.

2. Vehicle according to Claim 1, **wherein** a computer, equipped with a digital data computation algorithm, calculates, according to a closed-loop control system, based on said digital data, the forces transmitted from the sail to the hull in order to modify in real time the operation of the ship to optimize or regulate its aerodynamic thrust.

3. Vehicle according to Claim 2, **wherein** the computer equipped with a digital data computation algorithm calculates, as a complement to the closed-loop control system, according to an open-loop control system, and based on said digital data, the forces transmitted from the sail to the hull in order to modify in real time the operation of the ship to optimize its aerodynamic thrust.
